# EUROPEAN PATENT SPECIFICATION

(11) **EP 3 546 082 B1**
(45) Date of publication and mention of the grant of the patent: **13.05.2020**
(21) Application number: 18163967.5
(22) Date of filing: 26.03.2018
(51) Int. Cl.: B21D 39/20, B21D 41/02, F16L 19/028

(54) **PIPE EXPANDING APPARATUS FOR THIN STAINLESS STEEL PIPE**
ROHRAUFWEITUNGSVORRICHTUNG FÜR EIN DÜNNES EDELSTAHLROHR
APPAREIL D'EXPANSION DE TUYAU POUR TUYAU EN ACIER INOXYDABLE MINCE

(43) Date of publication of application: 02.10.2019
(73) Proprietor: O.N. Industries Ltd., Tsuyama-shi, Okayama 708-0011 (JP)
(72) Inventor: Ashida, Hiroshi, Tsuyama-shi, Okayama 708-0011 (JP)
(74) Representative: Hauck Patentanwaltspartnerschaft mbB

(56) References cited:
- EP-A1- 2 136 119
- WO-A1-2016/116558
- JP-B2- 3 467 545
- US-A1- 2011 226 034

## Description

The present invention relates to a pipe expanding apparatus according to the preamble of claim 1.

Such an apparatus is disclosed in JP-A-2002120029.

A preferred use of the apparatus is for a thin stainless steel pipe, the pipe expanding apparatus expanding the thin stainless steel pipe in order to form a chevron-shaped protrusion along an outer peripheral surface at an end of the thin stainless steel pipe, and particularly the pipe expanding apparatus can expand the thin stainless steel pipe to form the chevron-shaped protrusion without requiring large force during connection work between the expanded thin stainless steel pipe and a joint.

As to the pipe expanding apparatus for the thin stainless steel pipe, Japanese Examined Patent Publication No. Sho64-137, Japanese Patent No. 3467545, and Japanese Patent No. 5541624, which are previously proposed by the present applicant, are already known. These three inventions commonly disclose formation of the chevron-shaped protrusion disclosed in Japanese Examined Patent Publication No. Sho64-137, and Japanese Patent Nos. 3467545 and 5541624 relate to the improvement of Japanese Examined Patent Publication No. Sho64-137. Japanese Patent No. 3467545 discloses a connecting device that facilitates connection work by easily fitting a leading end of the thin stainless steel pipe in a main body inner hole of the joint in connecting the thin stainless steel pipe and the joint. In a pipe expanding apparatus disclosed in Japanese Patent No. 5541624, an action of force in the outward direction is prevented during pipe expansion so that a distortion is hardly generated in an expanded pipe member, thereby improving durability.

A nut that also serves as a pipe expanding ring is detachably fixed to the joint from both sides of an inclined surface of the chevron-shaped protrusion formed by expanding the thin stainless steel pipe by the conventional technique, which allows obtainment a connection mechanism in which the thin stainless steel pipe and the joint are firmly connected so as not to be detached.

However, when the nut that also serves as the pipe expanding ring and the joint are screwed together and tightened, friction increases because contact between the nut and the inclined surface of the chevron-shaped protrusion is surface contact, and large force is required for fastening, which becomes a cause that a worker gets tired. An object of the present invention is to provide a pipe expanding apparatus that can reduce a contact area between the inclined surface of the chevron-shaped protrusion and the nut that also serves as the pipe expanding ring by decreasing the frictional force. Another object of the present invention is to provide a pipe expanding apparatus that can prevent abrasion of a gasket that is in close contact with one of the inclined surfaces of the chevron-shaped protrusion by rotation of the thin stainless steel pipe by the frictional force with the nut tightly rotating on the other inclined surface of the chevron-shaped protrusion during fastening.

In order to solve the above problems, the present invention provides a pipe expanding apparatus for a thin stainless steel pipe, the apparatus including: a pipe expanding head including a fitting inner hole to which the thin stainless steel pipe is internally fitted, and a first dish type tapered portion formed in front of the fitting inner hole and inclined such that a front diameter of the first dish type tapered portion is expanded; a pipe expanding ring detachably fixed in front of an outer periphery of the pipe expanding head, the pipe expanding ring including a fitting hole to which the thin stainless steel pipe is internally fitted, and a second dish type tapered portion continuous to the first dish type tapered portion and inclined such that a front diameter of the second dish type tapered portion is reduced to form a chevron shape; a guide ring disposed on an inner side in a radial direction of the fitting inner hole, and to which the thin stainless steel pipe is internally fitted; a pressurizing rod inserted in a rod insertion hole formed in a center of the pipe expanding head, and having a rear end connected to a pressurizing device; a pipe expanding rubber externally fitted in front of the guide ring in the pressurizing rod; and a rubber holding portion formed in front of the pipe expanding rubber in the pressurizing rod, wherein a plurality of protrusions or recesses are disposed so as to be distributed in a whole tapered surface of the second dish type tapered portion.

In the pipe expanding apparatus for a thin stainless steel pipe, preferably, a male screw is formed in an outer peripheral surface of a front part of the pipe expanding head, a female screw is formed in an inner peripheral surface of a rear part of the pipe expanding ring, and the male screw and the female screw are screwed together to detachably fix the pipe expanding ring to the pipe expanding head.

In the pipe expanding apparatus for a thin stainless steel pipe, preferably, a fitting protrusion is formed in an outer peripheral surface of a front portion of the pipe expanding head, a fitting recess is formed in an inner peripheral surface of a rear portion of the pipe expanding ring, and the fitting protrusion is fitted in the fitting recess to detachably fix the pipe expanding ring to the pipe expanding head.

In the pipe expanding apparatus for a thin stainless steel pipe, each of the plurality of protrusions or recesses is preferably disposed on a plurality of concentric circles having different diameters in the tapered surface of the second dish type tapered portion.

In the pipe expanding apparatus for a thin stainless steel pipe, the plurality of protrusions or recesses are preferably distributed in the tapered surface in which center angles of the second dish type tapered portion are substantially equally separated from each other.

In the pipe expanding apparatus for a thin stainless steel pipe, the protrusion is preferably a granular protrusion.

In the pipe expanding apparatus for a thin stainless steel pipe, a projection or a dent is preferably formed in a surface of the first dish type tapered portion.

In the pipe expanding apparatus for a thin stainless steel pipe, the projection or the dent preferably has a rod shape or an elongated groove shape radially protruding from a center of the first dish type tapered portion toward an outer peripheral direction.

According to the present invention, the plurality of protrusions or recesses are disposed so as to be distributed in the whole tapered surface of the second dish type tapered portion of the pipe expanding ring forming the inclined surface in the expanded pipe portion of the chevron-shaped protrusion of the thin stainless steel pipe. Consequently, the corresponding portion of the thin stainless steel pipe that abuts on the protrusion is pressed by the pipe expanding rubber to form a pit, or the corresponding portion of the thin stainless steel pipe that abuts on the recess is pressed by the pipe expanding rubber to form a bulge. Through these actions, the gentle pit or bulge is formed in the inclined surface. In connecting the thin stainless steel pipe and the joint, a contact area between the inclined surface in the expanded pipe portion of the chevron-shaped protrusion of the thin stainless steel pipe and the tapered surface of the second dish type tapered portion of the pipe expanding ring that is also a nut is reduced due to the pit or the bulge, and a frictional resistance is reduced by an amount of the reduced contact area, which allows obtainment of a pipe expanding apparatus that can reduce labor for rotating the pipe expanding ring.

With the structure in which the fitting protrusion of the pipe expanding head and the fitting recess of the pipe expanding ring are fitted together so as to be detachably fixed, a nut including a tapered surface of another second dish type tapered portion can be used by removing the pipe expanding ring including the protrusion or the recess in the tapered surface of the second dish type tapered portion. Consequently, the pipe expanding ring can repeatedly be used, and the frictional resistance can be further reduced by forming a tapered surface of the second dish type tapered portion, such as a flat surface, a pit, and a bulge, which does not engage with the pit or bulge formed in the inclined surface of the expanded pipe portion of the thin stainless steel pipe.

In the case where one protrusion or recess is disposed on a plurality of concentric circles having different diameters in the tapered surface of the second dish type tapered portion, only one pit or bulge exists on the corresponding concentric circle in the inclined surface of the chevron-shaped protrusion of the thin stainless steel pipe. Consequently, the protrusion or recess and the pit or bulge are engaged with each other only once per rotation in fastening the nut that is the pipe expanding ring during the connection, and even if the protrusion or recess and the pit or bulge are engaged with each other, the protrusion or recess can climb over the pit or bulge and rotate except for a slight angle at a final fastening stage. Accordingly, a frictional resistance can be reduced. When the engagement is established at the final stage, it useful for loosening prevention even if the fastening rotation is stopped at that point.

In the case where the protrusion or the recess is provided at a position where the center angles on the tapered surface of the second dish type tapered portion are substantially equally separated from each other, an interval between the tapered surface of the nut and the inclined surface of the chevron-shaped protrusion can evenly be formed on an average.

In the case where the protrusion is the granular protrusion, a pipe expanding apparatus capable of obtaining a connecting mechanism with a small frictional force is achieved because the contact with the tapered surface during fastening is point contact.

In the case where the projection or the dent is formed in the surface of the first dish type tapered portion, a depression or a protuberance is also formed in the inclined surface of the chevron-shaped protrusion of the corresponding thin stainless steel pipe, so that a gasket is engaged with the depression or the protuberance during connection to prevent a torque generated in the thin stainless steel pipe.

In the case where the projections or the dents are radially formed from the center toward the outer peripheral direction, a pipe expanding apparatus that is a connecting mechanism capable of more strongly preventing the torque generated in the thin stainless steel pipe during connection can be achieved.
- Figs. 1 (a) and 1 (b): illustrate a pipe expanding apparatus for a thin stainless steel pipe according to a first embodiment of the present invention, where Fig. 1 (a) is a cross sectional view illustrating a state before expansion, and Fig. 1 (b) is a cross sectional view illustrating a state during expansion;
- Fig. 2: is an exploded perspective view illustrating components of the pipe expanding apparatus for the thin stainless steel pipe of the first embodiment of the present invention;
- Figs. 3 (a) and 3 (b): illustrate a pipe expanding apparatus for a thin stainless steel pipe according to a second embodiment of the present invention, where Fig. 3 (a) is an enlarged cross sectional view illustrating a main part before expansion, and Fig. 3 (b) is a front view illustrating a pipe expanding ring;
- Fig. 4: is a front view illustrating the pipe expanding ring (also serving as a nut) of the pipe expanding apparatus for the thin stainless steel pipe of the first embodiment of the present invention;
- Fig. 5 (a1): is a cross sectional view taken along line X-X in Fig. 4 in which a protrusion is provided in a tapered surface of a second dish type tapered portion of the pipe expanding ring,

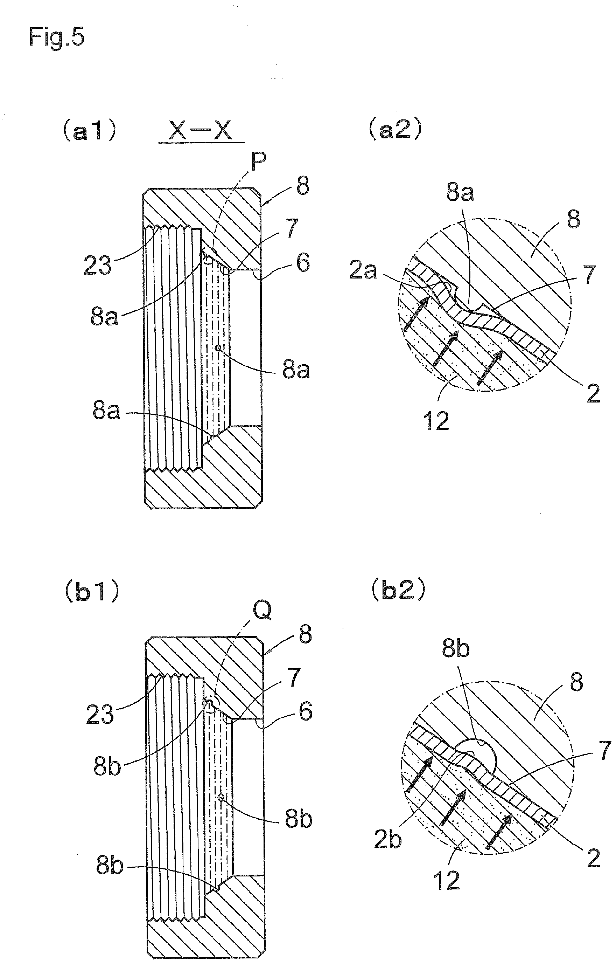

- Fig. 5 (a2): is an enlarged cross explanatory view illustrating a cross section of a portion P in Fig. 5 (a1) when a thin stainless steel pipe is expanded by pressing the thin stainless steel pipe using a pipe expanding rubber,

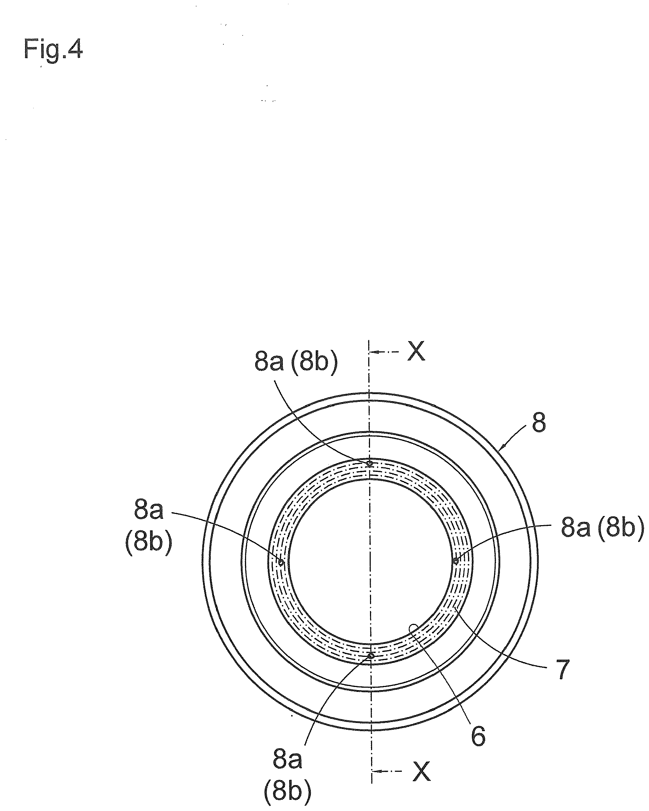

- Fig. 5 (b1): is a cross sectional view taken along line X-X in Fig. 4 in which a recess is provided in the tapered surface of the second dish type tapered portion of the pipe expanding ring, and
- Fig. 5 (b2): is an enlarged explanatory view illustrating a cross section of a portion Q in Fig. 5 (b1) when the thin stainless steel pipe is expanded by pressing the thin stainless steel pipe using the pipe expanding rubber;

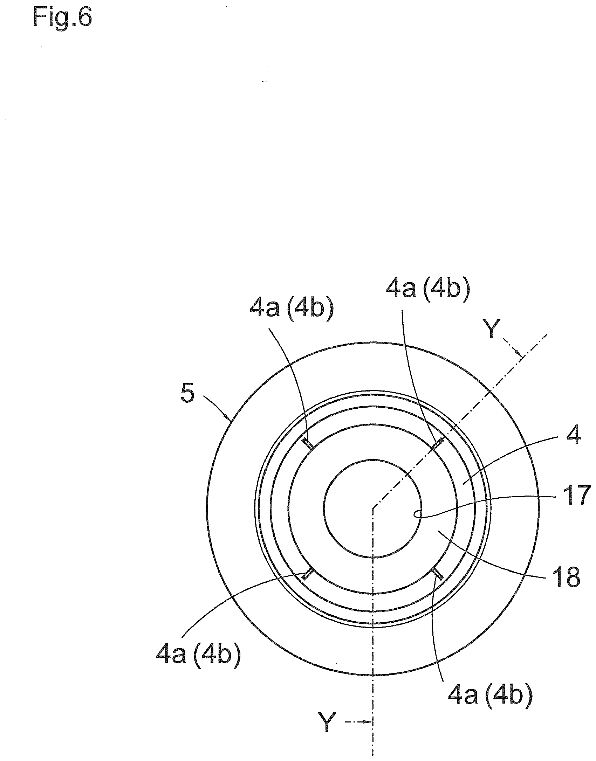

- Fig. 6: is a front view illustrating a pipe expanding head of the pipe expanding apparatus for the thin stainless steel pipe of the first embodiment of the present invention;

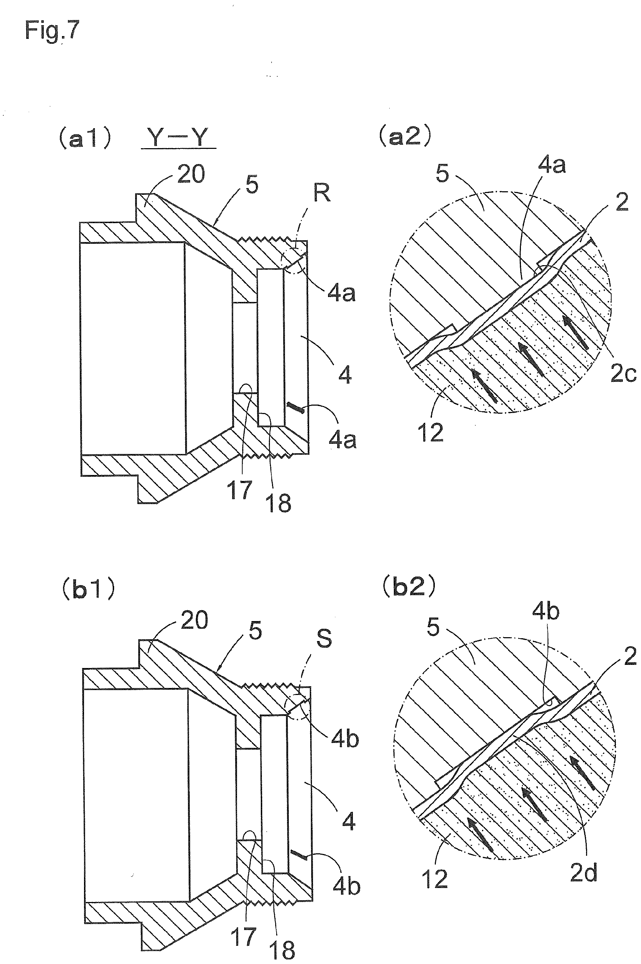

- Fig. 7 (a1): is a cross sectional view taken along line Y-Y in Fig. 6 in which a projection is provided in the tapered surface of a first dish type tapered portion of the pipe expanding head,
- Fig. 7 (a2): is an enlarged explanatory view illustrating a cross section of a portion R in Fig. 7 (a1) when the thin stainless steel pipe is expanded by pressing the thin stainless steel pipe using the pipe expanding rubber,
- Fig. 7 (b1): is a cross sectional view taken along line Y-Y in Fig. 6 in which a dent is provided in the tapered surface of the first dish type tapered portion of the pipe expanding head, and
- Fig. 7 (b2): is an enlarged explanatory view illustrating a cross section of a portion S in Fig. 7 (b1) when the thin stainless steel pipe is expanded by pressing the thin stainless steel pipe using the pipe expanding rubber; and

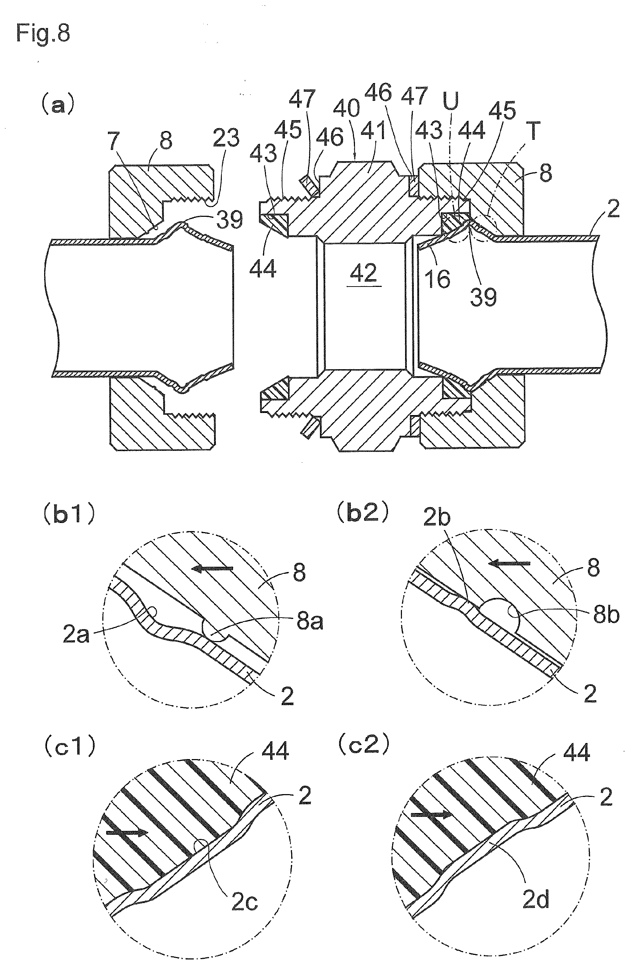

- Fig. 8 (a): is a cross sectional view illustrating a connection structure between the thin stainless steel pipe expanded by the present invention and a joint,
- Fig. 8 (b1): is an enlarged explanatory view illustrating a cross section of a portion T in Fig. 8(a) in which the protrusion is formed in the tapered surface of the second dish type tapered portion,
- Fig. 8 (b2): is an enlarged explanatory view illustrating the cross section of the portion T in Fig. 8(a) in which the recess is formed in the tapered surface of the second dish type tapered portion,

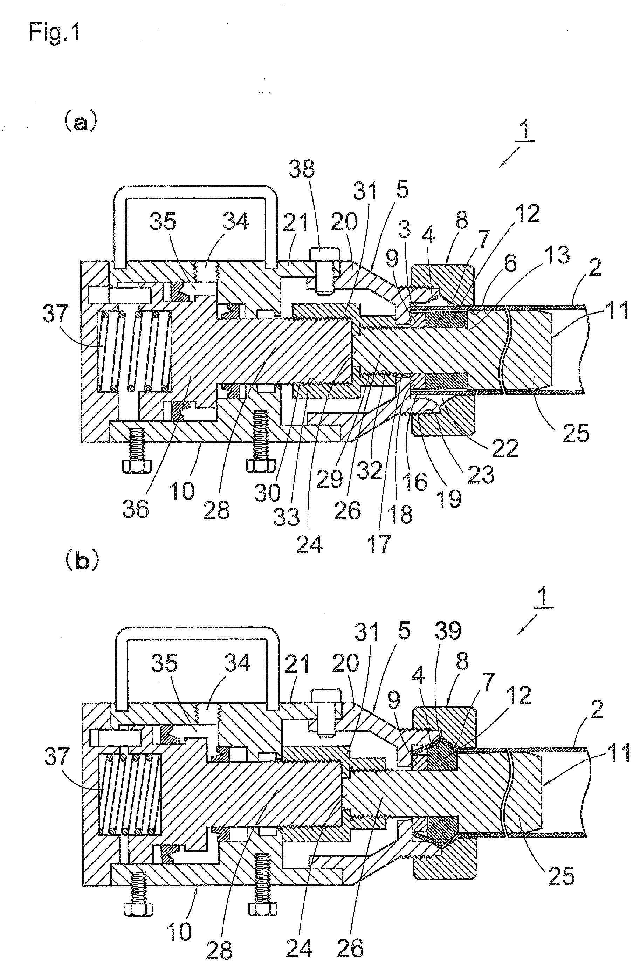

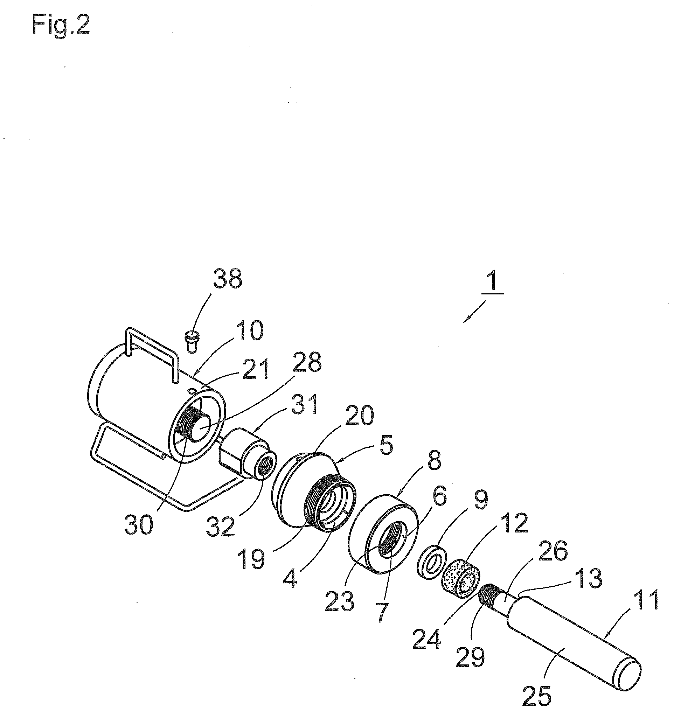

- Fig. 8 (c1): is an enlarged explanatory view illustrating a cross section of a portion U in Fig. 8(a) in which a depression is formed in one of inclined surfaces of a chevron-shaped protrusion of the thin stainless steel pipe, and
- Fig. 8 (c2): is an enlarged explanatory view illustrating a cross section of the portion U in Fig. 8(a) in which a protuberance is formed in one of the inclined surfaces of the chevron-shaped protrusion of the thin stainless steel pipe.
A preferred embodiment of the present invention will be described with reference to the drawings. As illustrated in Figs. 1(a), 1(b), and 2, a pipe expanding apparatus 1 for a thin stainless steel pipe according to a first embodiment of the present invention includes: a pipe expanding head 5 including a fitting inner hole 3 to which a thin stainless steel pipe 2 is internally fitted, and a first dish type tapered portion 4 formed in front of the fitting inner hole 3 and inclined such that a front diameter of the first dish type tapered portion 4 is expanded; a pipe expanding ring 8 detachably fixed in front of the pipe expanding head 5, and including a fitting hole 6 to which the thin stainless steel pipe 2 is internally fitted, and a second dish type tapered portion 7 continuous to the first dish type tapered portion 4 and inclined such that a front diameter of the second dish type tapered portion 7 is reduced; a guide ring 9 disposed on an inner side in a radial direction of the fitting inner hole 3, and to which the thin stainless steel pipe 2 is externally fitted; a pressurizing rod 11 inserted in the pipe expanding head 5, and having a rear end connected to a pressurizing device 10; a pipe expanding rubber 12 externally fitted in front of the guide ring 9 in the pressurizing rod 11; and a rubber holding portion 13 formed in front of the pipe expanding rubber 12 in the pressurizing rod 11. Fig. 2 is an exploded perspective view illustrating components of the pipe expanding apparatus 1 for the thin stainless steel pipe. Details will be described below.

The pipe expanding head 5 is opened to the front of the pipe expanding apparatus 1 for the thin stainless steel pipe, namely, the side (the right side in the figure) where the thin stainless steel pipe 2 is fitted in, and includes the fitting inner hole 3 in which a leading end 16 of the thin stainless steel pipe 2 inserted from the front side is fitted.

The first dish type tapered portion 4 is formed in front of the fitting inner hole 3, and the first dish type tapered portion 4 is inclined such that the front diameter of the first dish type tapered portion 4 is enlarged. That is, the first dish type tapered portion 4 is a tapered surface having a truncated cone shape, and the diameter of the first dish type tapered portion 4 is linearly enlarged from the rear end having the same diameter as the fitting inner hole 3, namely, a boundary between the first dish type tapered portion 4 and the fitting inner hole 3 toward the front. On the other hand, a rod insertion hole 17 having a diameter smaller than that of the fitting inner hole 3 is formed behind the fitting inner hole 3, namely, on the side (the left side in the figure) opposite to the side where the thin stainless steel pipe 2 is fitted in. The rod insertion hole 17 is a hole in which the pressurizing rod 11 is inserted, and is formed in a center of the radial direction of the pipe expanding head 5. A pipe abutment surface 18 is formed by a step between the rod insertion hole 17 and the fitting inner hole 3. A male screw 19 is formed in the outer peripheral surface in a front portion of the pipe expanding head 5, namely, the outer peripheral surface of a cylindrical portion constituting the fitting inner hole 3. A rear end 20 of the pipe expanding head 5 is connected to the pressurizing device 10. The rear end 20 of the pipe expanding head 5 is fitted in a body frame 21 of the pressurizing device 10, and fixed with a knock pin 38.

The pipe expanding ring 8 includes a second dish type tapered portion 7 that is continuous to the first dish type tapered portion 4 in the inner peripheral surface of the pipe expanding ring 8, and the second dish type tapered portion 7 is inclined such that the front diameter of the second dish type tapered portion 7 is reduced. That is, the second dish type tapered portion 7 is a tapered surface having a truncated cone shape, and the diameter of the second dish type tapered portion 7 is linearly reduced from the rear end having the same diameter as the front end of the first dish type tapered portion 4 toward the front. A peripheral groove 22 having a chevron shape in cross section is formed by the first dish type tapered portion 4 and the second dish type tapered portion 7, which are continuous to each other. The fitting hole 6 in which the thin stainless steel pipe 2 is fitted is formed in front of the second dish type tapered portion 7. The pipe expanding ring 8 is detachably fixed to the front of the pipe expanding head 5. A female screw 23 is formed in the inner peripheral surface of a rear portion of the second dish type tapered portion 7, and the female screw 23 is fixed by screwing the male screw 19 of the pipe expanding head 5 in the female screw 23. Thus, the pipe expanding ring 8 is detachably attached to the pipe expanding head 5 by the rotation of the pipe expanding ring 8. For this reason, it is preferable to form irregularities for wrenching in the outer peripheral surface of the pipe expanding ring 8.

The guide ring 9 is a cylindrical body having a constant thickness. The guide ring 9 is disposed in close contact with the pipe abutment surface 18 on the inner side in the radial direction of the fitting inner hole 3, and the thin stainless steel pipe 2 is externally fitted to the guide ring 9. The guide ring 9 is externally fitted to the pressurizing rod 11 disposed in the center of the radial direction of the fitting inner hole 3, whereby the guide ring 9 is disposed coaxially with the fitting inner hole 3 on the inner side in the radial direction of the fitting inner hole 3.

The pressurizing rod 11 is a rod-shaped member having a circular shape in cross section. The pressurizing rod 11 is inserted in the rod insertion hole 17 of the pipe expanding head 5, and a rear end 24 of the pressurizing rod 11 is connected to the pressurizing device 10. The guide ring 9 is externally fitted in front of the rod insertion hole 17 as described above, a pipe expanding rubber 12 (to be described later) is externally fitted in front of the guide ring 9, and the rubber holding portion 13 is formed in front of the pipe expanding rubber 12. In the pressurizing rod 11, a step is formed at a position ahead of the guide ring 9 by a predetermined distance, and the step constitutes the rubber holding portion 13. A large diameter portion 25 having a large diameter is formed in the front of the rubber holding portion 13, and a small diameter portion 26 having a small diameter is formed in the rear of the rubber holding portion 13. The diameter of the large diameter portion 25 of the pressurizing rod 11 is made slightly smaller than the inner diameter of the thin stainless steel pipe 2, which allows the large diameter portion 25 to act as a guide portion during the insertion of the thin stainless steel pipe 2. That is, when the thin stainless steel pipe 2 is fitted between the fitting inner hole 3 and the guide ring 9, the thin stainless steel pipe 2 is fitted along the large diameter portion 25 of the pressurizing rod 11 having the diameter slightly smaller than the inner diameter of the thin stainless steel pipe 2, which allows the thin stainless steel pipe 2 to be fitted straight such that the center axis of the thin stainless steel pipe 2 is coaxial with center axes of the fitting inner hole 3 and the guide ring 9.

On the other hand, at the rear of the rod insertion hole 17 of the pressurizing rod 11, the rear end 24 of the pressurizing rod 11 is connected to a drive rod 28 of the pressurizing device 10. Specifically, male screws 29, 30 are formed in the outer peripheral surface of the rear end 24 of the pressurizing rod 11 and the outer peripheral surface of the front end of the drive rod 28, respectively, and the pressurizing rod 11 and the drive rod 28 are connected to each other by screwing the male screws 29, 30 in female screws 32, 33 formed on both sides of a connecting pipe 31. The drive rod 28 is a rod-shaped member that moves rearward by the action of a predetermined pressure due to the operation of the pressurizing device 10. In the first embodiment, a hydraulic cylinder is used as the pressurizing device 10. As illustrated in Figs. 1 (a) and 1 (b), the pressurizing device 10 includes: a body frame 21; a cylinder 35 formed inside the body frame 21 and into which a hydraulic oil flows through a supply and discharge port 34; a piston 36 that slides in the forward and backward direction in the cylinder 35; a drive rod 28 connected to the front of the piston 36; and a return spring 37 that returns a piston 36 moved backward by hydraulic pressure to the front. Although not illustrated, the pressurizing device 10 also includes a hydraulic pump that applies pressure to hydraulic oil supplied to the supply and discharge port 34, and a hydraulic valve that adjusts a flow rate and pressure of the hydraulic oil. Any type of pressurizing devices 10 may be used as long as it can apply pressure in order to rearwardly operate the pressurizing rod 11.

As illustrated in Figs. 1 (a), 1(b), and 2, the pipe expanding rubber 12 is a cylindrical body having a constant thickness. The pipe expanding rubber 12 is externally fitted in front of the guide ring 9 in the pressurizing rod 11, and disposed while being sandwiched between the guide ring 9 and the rubber holding portion 13 of the pressurizing rod 11. Thus, a length in a front-rear direction of the pipe expanding rubber 12 is formed so as to be substantially equal to a distance between the guide ring 9 and the rubber holding portion 13 of the pressurizing rod 11 in a state in which the pressurizing rod 11 is located at a foremost position. The diameter of the outer peripheral surface of the pipe expanding rubber 12 is formed smaller than the diameter of the inner peripheral surface of the thin stainless steel pipe 2 such that the thin stainless steel pipe 2 can externally be fitted. In this case, the diameter of the outer peripheral surface of the pipe expanding rubber 12 is formed substantially equal to or slightly smaller than the diameter of the large diameter portion 25 of the pressurizing rod 11. Although an elastic material is used as a material for the pipe expanding rubber 12, a material having high fluidity and less reduction in volume due to compression is preferably used. In this case, urethane rubber is used.

As illustrated in Figs. 4 and 5 (a1), the pipe expanding ring 8 is formed such that the protrusions 8a are distributed in the whole tapered surface of the second dish type tapered portion 7. Preferably, the protrusion 8a is a granular protrusion having a rounded leading end because a proportion to the tapered surface is small and therefore a pit 2a formed in the surface of the thin stainless steel pipe 2 becomes small. However, the protrusion 8a may have another shape. Desirably, the protrusions 8a are uniformly distributed over the whole tapered surface. The number of protrusions 8a is not limited, but at least four protrusions 8a are preferably provided. As illustrated in Fig. 4, the protrusions 8a are disposed in the tapered surface of the second dish type tapered portion 7 at equal intervals from the center of the pipe expanding ring 8, and desirably, only one protrusion 8a is disposed on the same concentric circle from the center. However, the present invention is not limited to the disposition of the protrusions 8a in Fig. 4. Chain lines drawn in the tapered surface of the second dish type tapered portion 7 in Figs. 4 and 5 (a1) indicate a concentric circle.

As illustrated in Figs. 4 and 5 (b1), the pipe expanding ring 8 of another embodiment is formed such that the recesses 8b are distributed over the whole tapered surface of the second dish type tapered portion 7. The recess 8b is a small hole in which a bottom is rounded. A height and a width of a bulge 2b formed in the thin stainless steel pipe 2 are determined depending on a depth and a diameter of the recess 8b. Similarly to the protrusion 8a, desirably, the recesses 8b are uniformly distributed over the whole tapered surface. The number of recesses 8b is not limited, but at least four recesses 8b are preferably provided. As illustrated in Fig. 4, the recesses 8b are disposed in the tapered surface of the second dish type tapered portion 7 at equal intervals from the center of the pipe expanding ring 8, and desirably, only one recess 8b is disposed on the same concentric circle from the center. However, the present invention is not limited to the disposition of the recesses 8b in Fig. 4. Chain lines drawn in the tapered surface of the second dish type tapered portion 7 in Figs. 4 and 5 (b1) indicate a concentric circle.

As illustrated in Figs. 6 and 7 (a1), in the pipe expanding head 5, a projection 4a is formed in the tapered surface of the first dish type tapered portion 4. A plurality of rod-shaped projections 4a are preferably radially formed at equal intervals from the center toward the outer periphery, but there is no particular limitation. In another embodiment, as illustrated in Figs. 6 and 7 (b1), dents 4b are formed in the tapered surface of the first dish type tapered portion 4 of the pipe expanding head 5.

Similarly, a plurality of rod-shaped dents 4b are preferably radially formed at equal intervals from the center toward the outer periphery, but there is no particular limitation.

A method of using the pipe expanding apparatus 1 for the thin stainless steel pipe will be described below. As illustrated in Fig. 1 (a), after the pipe expanding ring 8 and the pipe expanding head 5 are screwed and connected to each other, the leading end 16 of the thin stainless steel pipe 2 is fitted between the fitting inner hole 3 of the pipe expanding head 5 and the guide ring 9 while the thin stainless steel pipe 2 is externally fitted to the large diameter portion 25 of the pressurizing rod 11. Then, as illustrated in Fig. 1 (b), the pressurizing device 10 is operated to move the pressurizing rod 11 rearward by applying a predetermined pressure. At this point, the rubber holding portion 13 of the pressurizing rod 11 moves rearward, but the guide ring 9 does not move. Consequently, the pipe expanding rubber 12 is compressed in the front-rear direction between the guide ring 9 and the rubber holding portion 13 of the pressurizing rod 11, and therefore the pipe expanding rubber 12 bulges outward in the radial direction. As a result, the thin stainless steel pipe 2 is extruded outward in the radial direction by the bulged pipe expanding rubber 12, but since the peripheral groove 22 (see Fig. 1) having the chevron shape in cross section is formed in the outer periphery of the thin stainless steel pipe 2 by the first dish type tapered portion 4 of the pipe expanding head 5 and the second dish type tapered portion 7 of the pipe expanding ring 8, the thin stainless steel pipe 2 bulges along the peripheral groove 22 to form an expanded pipe portion 39 having the chevron-shaped protrusion.

In a process of forming the expanded pipe portion 39, in the case where the protrusion 8a is formed in the tapered surface of the second dish type tapered portion 7 as illustrated in Fig. 5 (a1), the thin stainless steel pipe 2 is pressed as indicated by an arrow from the inner side by the pipe expanding rubber 12 in the direction of the second dish type tapered portion 7 as shown in Fig. 5 (a2), so that the pit 2a is formed in a place that is in contact with the protrusion 8a. Due to the thickness of the thin stainless steel pipe 2, the pit 2a does not have the same shape as the protrusion 8a, but the pit 2a is a shallow pit drawing a gentle curve in which a depth is substantially equal to the height of the protrusion 8a. In the case where the recess 8b is formed in the tapered surface of the second dish type tapered portion 7 as illustrated in Fig. 5 (b1), the bulge 2b is formed at a place facing the recess 8b by the pressing action of the pipe expanding rubber 12 as illustrated in Fig. 5 (b2). The height of the bulge 2b is shorter than the depth of the recess 8b due to the thickness of the thin stainless steel pipe 2. A wide opening of the recess 8b is approximated to the depth of the recess 8b. The pit 2a and the bulge 2b are formed in one of the inclined surfaces of the expanded pipe portion 39, which is the chevron-shaped protrusion of the thin stainless steel pipe 2, during the pipe expansion by the protrusion 8a and the recess 8b.

In the case where the projection 4a is provided in the tapered surface of the first dish type tapered portion 4 as illustrated in Fig. 7 (a1), a depression 2c is formed in the other inclined surface of the expanded pipe portion 39 that is the chevron-shaped protrusion of the thin stainless steel pipe 2 as illustrated in Fig. 7 (a2). In the case where the dent 4b is provided as shown in Fig. 7 (b1), a protuberance 2d is formed as illustrated in Fig. 7 (b2).

After the pipe expansion, the screwing engagement between the pipe expanding ring 8 and the pipe expanding head 5 is removed, and the thin stainless steel pipe 2 is pulled out forward. The pipe expanding ring 8 may be used as a nut during the connection to a joint 40 (to be described later) while being externally fitted to the thin stainless steel pipe 2. Alternatively, the pipe expanding ring 8 may be replaced with a nut having the flat tapered surface of the second dish type tapered portion 7 or a nut having irregularities in a different shape or a different position from the protrusion 8a or the recess 8b. In this case, the pipe expanding ring 8 can be removed from the end on the side opposite to the side where the expanded pipe portion 39 is formed, and used again in expanding the pipe.

The thin stainless steel pipe 2 expanded by the pipe expanding apparatus 1 for the thin stainless steel pipe is connected to the joint 40 as illustrated in Fig. 8(a). The joint 40 includes a main body inner hole 42 axially penetrating the center of the main body 41, a gasket fitting portion 43 formed by enlarging the diameter of the inner peripheral surface at the end of the main body inner hole 42, a gasket 44 fitted in the gasket fitting portion 43, and a male screw 45 formed in the outer peripheral surface at the end of the main body 41. During the connection, the leading end 16 of the thin stainless steel pipe 2 is fitted in the main body inner hole 42 of the joint 40. In the case where the diameter of the leading end 16 of the thin stainless steel pipe 2 is reduced, the leading end 16 is easily fitted in the main body inner hole 42 of the joint 40. The male screw 45 of the joint 40 is screwed in the female screw 23 of the pipe expanding ring 8 externally fitted to the thin stainless steel pipe 2, and the pipe expanding ring 8 is fastened. Consequently, the expanded pipe portion 39 of the thin stainless steel pipe 2 is sandwiched from both sides by the second dish type tapered portion 7 of the pipe expanding ring 8 and the gasket 44 of the joint 40, and fixed in close contact.

In fastening the pipe expanding ring 8, because the protrusion 8a exists in the tapered surface of the second dish type tapered portion 7 of the pipe expanding ring 8, as illustrated in Fig. 8 (b1), a distance from one of the inclined surfaces of the expanded pipe portion 39 that is the chevron-shaped protrusion of the thin stainless steel pipe 2 is generated by the height of the protrusion 8a. For this reason, a frictional resistance is reduced, and the pipe expanding ring 8 is easily rotated. Even if the protrusion 8a enters the pit 2a, an inclination angle of the pit 2a is very gentle, and the protrusion 8a easily climbs over the pit 2a. When one protrusion 8a is formed on the same concentric circle, because the protrusion 8a is fitted into the pit 2a only once per rotation, the protrusion 8a is hardly affected by the pit 2a. Conversely, as illustrated in Fig. 8 (b2), the same applies to the case where the recess 8b exists in the second dish type tapered portion 7 to form the bulge 2b in the inclined surface of the thin stainless steel pipe 2.

In the case where the depression 2c is formed in one of the inclined surfaces of the expanded pipe portion 39 that is the chevron-shaped protrusion of the thin stainless steel pipe 2, because the pressed gasket 44 enters the depression 2c as illustrated in Fig. 8 (c1), the rotation can be prevented even if a torque is applied to the thin stainless steel pipe 2. Conversely, in the case where the protuberance 2d is formed in one of the inclined surfaces, because the protuberance 2d enters the gasket 44 as illustrated in Fig. 8 (c2), the rotation of the thin stainless steel pipe 2 can be prevented.

In the embodiment of the connection mechanism between the thin stainless steel pipe 2 and the joint 40, a colored dish washer 47 provided between a step 46 of the main body 41 of the joint 40 and the pipe expanding ring 8 is disposed, and whether the connection is perfectly performed can be checked based on whether the color is seen from the outside.

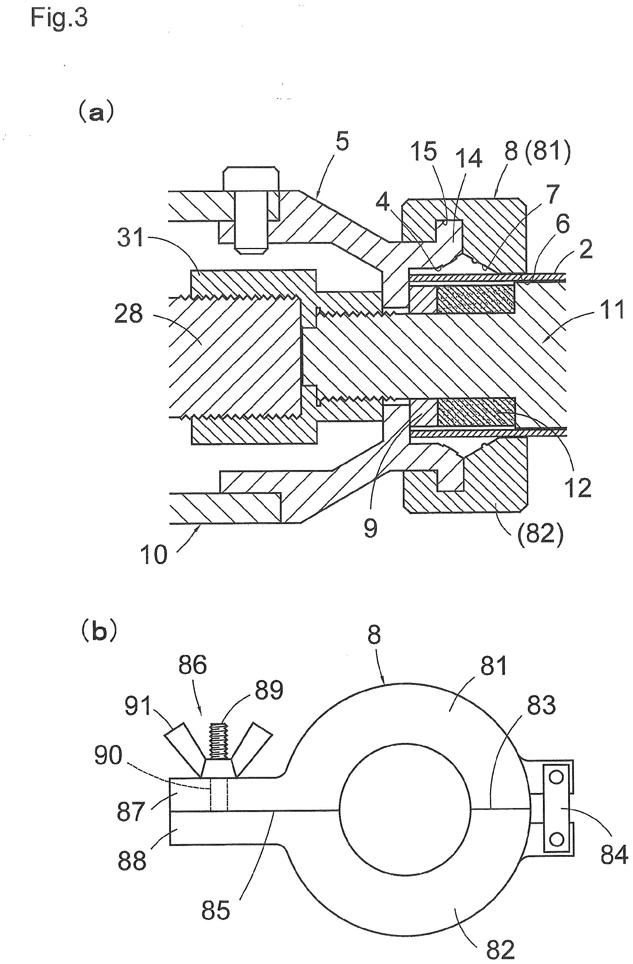

A pipe expanding apparatus 1 for a thin metal pipe according to a second embodiment of the present invention will be described below. The pipe expanding apparatus 1 for the thin stainless steel pipe according to the second embodiment is different from that of the first embodiment in that a shape of the outer peripheral surface of the front of the pipe expanding head 5 varies due to the difference in shape configuration of the pipe expanding ring 8. That is, as illustrated in Fig. 3 (a), a fitting protrusion 14 is formed instead of the male screw 19 (see Fig. 1) in the outer peripheral surface of the front portion of the pipe expanding head 5, a fitting recess 15 that is a peripheral groove having a U-shape in cross section is formed instead of the female screw 23 (see Fig. 1) in the inner peripheral surface of the rear portion of the pipe expanding ring 8, and the fitting protrusion 14 is fitted in the fitting recess 15 to detachably fix the pipe expanding ring 8 to the pipe expanding head 5.

As illustrated in Fig. 3 (b), the pipe expanding ring 8 is divided into an upper ring 81 and a lower ring 82 by a horizontal line passing through a central axis. A hinge 84 is formed in one connecting portion 83 between the upper ring 81 and the lower ring 82, and the upper ring 81 and the lower ring 82 are separated from each other by rotating about the hinge 84. A locking portion 86 that locks the upper ring 81 and the lower ring 82 while the upper ring 81 and the lower ring 82 are connected to each other is formed in the other connecting portion 85 between the upper ring 81 and the lower ring 82. An upper projection 87 and a lower projection 88, which protrude outward, are formed as the locking portion 86 in the upper ring 81 and the lower ring 82 of the other connecting portion 85, a male screw 89 protruding upward in a vertical direction is formed in the lower projection 88, and a screw insertion hole 90 in which the male screw 89 is inserted is formed in the upper projection 87. In the connection, the male screw 89 is inserted in the screw insertion hole 90, and detachably fixed by a butterfly-nut 91.

The configurations of the remaining portions such as the fitting inner hole 3 and the first dish type tapered portion 4 are similar to those of the first embodiment. The configurations of the pipe expanding ring 8 and the pipe expanding head 5 are not limited to the second embodiment. The pipe expanding ring 8 can be detachably fixed to the pipe expanding head 5, and other configurations can be adopted as long as the second dish type tapered portion 7 can maintain the state in which the chevron-shaped peripheral groove 22 is formed without separating from the first dish type tapered portion 4 even if the pressure is applied by the pipe expanding rubber 12 during the pipe expansion.

In the pipe expanding apparatus 1 for the thin stainless steel pipe according to the second embodiment, after the thin stainless steel pipe 2 is expanded, the butterfly-nut 91 is detached, and the pipe expanding ring 8 is separated and removed, whereby the thin stainless steel pipe 2 can be pulled out forward and removed. Because the pipe expanding ring 8 is not used in the connection to the joint 40, one pipe expanding ring 8 is repeatedly used. In this case, the nut having the same shape as the pipe expanding ring 8 of the first embodiment is externally fitted from the other side of the thin stainless steel pipe 2, and used in the connection to the joint 40. At this time, the tapered surface of the second dish type tapered portion 7 may be flat, or the protrusion 8a and the recess 8b may be provided in the tapered surface of the second dish type tapered portion 7.

The present invention can also be applied to a pipe expanding apparatus for another thin metal pipe other than the thin stainless steel pipe.

Explanation of references
- 1: pipe expanding apparatus
- 2: thin stainless steel pipe
- 2a: pit
- 2b: bulge
- 2c: depression
- 2d: protuberance
- 3: fitting inner hole
- 4: first dish type tapered portion
- 4a: projection
- 4b: dent
- 5: pipe expanding head
- 6: fitting hole
- 7: second dish type tapered portion
- 8: pipe expanding ring
- 8a: protrusion
- 8b: recess
- 9: guide ring
- 10: pressurizing device
- 11: pressurizing rod
- 12: pipe expanding rubber
- 13: rubber holding portion
- 14: fitting protrusion
- 15: fitting recess
- 17: rod insertion hole
- 19: male screw
- 23: female screw

## Claims

1. A pipe expanding apparatus (1) for a thin stainless steel pipe (2), comprising:
a pipe expanding head (5) including a fitting inner hole (3) to which the thin stainless steel pipe (2) is internally fitted, and a first dish type tapered portion (4) formed in front of the fitting inner hole (3) and inclined such that a front diameter of the first dish type tapered portion (4) is expanded;
a pipe expanding ring (8) detachably fixed in front of an outer periphery of the pipe expanding head (5), the pipe expanding ring (8) including a fitting hole to which the thin stainless steel pipe (2) is internally fitted, and a second dish type tapered portion (7) continuous to the first dish type tapered portion (4) and inclined such that a front diameter of the second dish type tapered portion (7) is reduced to form a chevron shape;
a guide ring (9) disposed on an inner side in a radial direction of the fitting inner hole (3), and to which the thin stainless steel pipe (2) is externally fitted;
a pressurizing rod (11) inserted in a rod insertion hole (17) formed in a center of the pipe expanding head (5), and having a rear end connected to a pressurizing device (10);
a pipe expanding rubber (12) externally fitted in front of the guide ring (9) in the pressurizing rod (11); and
a rubber holding portion (13) formed in front of the pipe expanding rubber (12) in the pressurizing rod (11),
**characterized in that**
a plurality of protrusions (8a) or recesses (8b) are disposed so as to be distributed in a whole tapered surface of the second dish type tapered portion (7).

2. The pipe expanding apparatus (1) for a thin stainless steel pipe (2) according to claim 1, **characterized in that** a male screw (19) is formed in an outer peripheral surface of a front part of the pipe expanding head (5), a female screw (23) is formed in an inner peripheral surface of a rear part of the pipe expanding ring (8), and the male screw (19) and the female screw (23) are screwed together to detachably fix the pipe expanding ring (8) to the pipe expanding head (5).

3. The pipe expanding apparatus (1) for a thin stainless steel pipe (2) according to claim 1, **characterized in that** a fitting protrusion (14) is formed in an outer peripheral surface of a front portion of the pipe expanding head (5), a fitting recess (15) is formed in an inner peripheral surface of a rear portion of the pipe expanding ring (8), and the fitting protrusion (14) is fitted in the fitting recess (15) to detachably fix the pipe expanding ring (8) to the pipe expanding head (5).

4. The pipe expanding apparatus (1) for a thin stainless steel pipe (2) according to any one of claims 1 to 3, **characterized in that** each of the plurality of protrusions (8a) or recesses (8b) is disposed on a plurality of concentric circles having different diameters in the tapered surface of the second dish type tapered portion (7).

5. The pipe expanding apparatus (1) for a thin stainless steel pipe (2) according to any one of claims 1 to 4, **characterized in that** the plurality of protrusions (8a) or recesses (8b) are distributed in the tapered surface in which center angles of the second dish type tapered portion (7) are substantially equally separated from each other.

6. The pipe expanding apparatus (1) for a thin stainless steel pipe (2) according to any one of claims 1 to 5, **characterized in that** the protrusion (8a) is a granular protrusion.

7. The pipe expanding apparatus (1) for a thin stainless steel pipe (2) according to any one of claims 1 to 6, **characterized in that** a projection (4a) or a dent (4b) is formed in a surface of the first dish type tapered portion (4).

8. The pipe expanding apparatus (1) for a thin stainless steel pipe (2) according to claim 7, **characterized in that** the projection (4a) or the dent (4b) has a rod shape or an elongated groove shape radially protruding from a center of the first dish type tapered portion (4) toward an outer peripheral direction.

## Patentansprüche

1. Rohraufweitungseinrichtung (1) für ein dünnes Edelstahlrohr (2), umfassend:
einen Rohraufweitungskopf (5), der eine Innen-Passbohrung (3), in die das dünne Edelstahlrohr (2) innen eingepasst wird, und einen ersten, tellerartigen, sich verjüngenden Abschnitt (4) umfasst, der vor der Innen-Passbohrung (3) gebildet ist und so geneigt ist, dass ein vorderer Durchmesser des ersten, tellerartigen, sich verjüngenden Abschnitts (4) erweitert ist;
einen Rohraufweitungsring (8), der lösbar vor einem Außenumfang des Rohraufweitungskopfes (5) fixiert ist, wobei der Rohraufweitungsring (8) eine Passbohrung, in die das dünne Edelstahlrohr (2) innen eingepasst ist, und einen zweiten, tellerartigen, sich verjüngenden Abschnitt (7) umfasst, der stetig an den ersten tellerartigen, sich verjüngenden Abschnitt (4) anschließt und so geneigt ist, dass ein vorderer Durchmesser des zweiten, tellerartigen, sich verjüngenden Abschnitts (7) verringert ist, um eine Winkelform zu bilden;
einen Führungsring (9), der an einer Innenseite in einer radialen Richtung der Innen-Passbohrung (3) angeordnet ist und auf dem das dünne Edelstahlrohr (2) extern aufgepasst ist;
eine Druckstange (11), die in eine Stangen-Einführbohrung (17) eingeführt ist, die in einer Mitte des Rohraufweitungskopfes (5) gebildet ist und die ein rückwärtiges Ende aufweist, das mit einer Druckvorrichtung (10) verbunden ist;
ein Rohraufweitungsgummi (12), das extern vor dem Führungsring (9) auf die Druckstange (11) aufgepasst ist; und
einen Gummihalteabschnitt (13), der vor dem Rohraufweitungsgummi (12) an der Druckstange (11) gebildet ist,
**dadurch gekennzeichnet, dass**
eine Vielzahl von Vorsprüngen (8a) oder Aussparungen (8b) so angeordnet ist, dass sie in einer gesamten sich verjüngenden Oberfläche des zweiten, tellerartigen, sich verjüngenden Abschnitts (7) verteilt ist.

2. Rohraufweitungseinrichtung (1) für ein dünnes Edelstahlrohr (2) nach Anspruch 1, **dadurch gekennzeichnet, dass** eine Außengewindeschraube (19) in einer äußeren Umfangsoberfläche eines vorderen Teils des Rohraufweitungskopfes (5) gebildet ist, eine Innengewindeschraube (23) in einer inneren Umfangsoberfläche eines hinteren Teils des Rohraufweitungsrings (8) gebildet ist und die Außengewindeschraube (19) und die Innengewindeschraube (23) zusammengeschraubt sind, um den Rohraufweitungsring (8) lösbar am Rohraufweitungskopf (5) zu fixieren.

3. Rohraufweitungseinrichtung (1) für ein dünnes Edelstahlrohr (2) nach Anspruch 1, **dadurch gekennzeichnet, dass** ein Passvorsprung (14) in einer äußeren Umfangsoberfläche eines vorderen Abschnitts des Rohraufweitungskopfes (5) gebildet ist, eine Passaussparung (15) in einer inneren Umfangsoberfläche eines hinteren Abschnitts des Rohraufweitungsrings (8) gebildet ist und der Passvorsprung (14) in die Passaussparung (15) eingepasst ist, um den Rohraufweitungsring (8) lösbar am Rohraufweitungskopf (5) zu fixieren.

4. Rohraufweitungseinrichtung (1) für ein dünnes Edelstahlrohr (2) nach einem beliebigen der Ansprüche 1 bis 3, **dadurch gekennzeichnet, dass** jeder bzw. jede der Vielzahl von Vorsprüngen (8a) oder Aussparungen (8b) auf einer Vielzahl von konzentrischen Kreisen angeordnet ist, die verschiedene Durchmesser in der sich verjüngenden Oberfläche des zweiten, tellerartigen Abschnitts (7) aufweisen.

5. Rohraufweitungseinrichtung (1) für ein dünnes Edelstahlrohr (2) nach einem beliebigen der Ansprüche 1 bis 4, **dadurch gekennzeichnet, dass** die Vielzahl von Vorsprüngen (8a) oder Aussparungen (8b) in der sich verjüngenden Oberfläche angeordnet ist, in der Zentriwinkel der zweiten tellerartigen, sich verjüngenden Oberfläche (7) im Wesentlichen gleich beabstandet sind.

6. Rohraufweitungseinrichtung (1) für ein dünnes Edelstahlrohr (2) nach einem beliebigen der Ansprüche 1 bis 5, **dadurch gekennzeichnet, dass** der Vorsprung (8a) ein körniger Vorsprung ist.

7. Rohraufweitungseinrichtung (1) für ein dünnes Edelstahlrohr (2) nach einem beliebigen der Ansprüche 1 bis 6, **dadurch gekennzeichnet, dass** ein Vorsprung (4a) oder eine Vertiefung (4b) in einer Oberfläche des ersten, tellerartigen, sich verjüngenden Abschnitts (4) gebildet ist.

8. Rohraufweitungseinrichtung (1) für ein dünnes Edelstahlrohr (2) nach Anspruch 7, **dadurch gekennzeichnet, dass** der Vorsprung (4a) oder die Vertiefung (4b) die Form einer Stange bzw. einer länglichen Nut aufweist, die radial aus einem Mittelpunkt des ersten, tellerartigen, sich verjüngenden Abschnitts (4) in eine äußere Umfangsrichtung hervorsteht.

## Revendications

1. Appareil d'expansion de tuyau (1) pour un tuyau en acier inoxydable mince (2), comprenant :
une tête d'expansion de tuyau (5) comprenant un trou intérieur de montage (3) sur lequel le tuyau en acier inoxydable mince (2) est monté à l'intérieur, et une première partie conique de type assiette (4) formée à l'avant du trou intérieur de montage (3) et inclinée de sorte qu'un diamètre avant de la première partie conique de type assiette (4) est expansé ;
une bague d'expansion de tuyau (8) fixée de manière amovible à l'avant d'une périphérie extérieure de la tête d'expansion de tuyau (5), la bague d'expansion de tuyau (8) comprenant un trou monté sur lequel le tuyau en acier inoxydable (2) est monté de manière interne, et une seconde partie conique de type assiette (7) continue à la première partie conique de type assiette (4) et inclinée de sorte qu'un diamètre avant de la seconde partie conique de type assiette (7) est réduite pour produire une forme de chevron ;
une bague de guidage (9) placée sur un côté intérieur dans une direction radiale du trou intérieur de montage (3), et sur lequel le tuyau en acier inoxydable mince (2) est monté à l'extérieur ;
une tige de mise sous pression (11) insérée dans un trou d'insertion de la tige (17) formé dans un centre de la tête d'expansion de tuyau (5) et ayant une extrémité arrière raccordée à un dispositif de mise sous pression (10) ;
un caoutchouc d'expansion de tuyau (12) monté à l'extérieur à l'avant de la bague de guidage (9) dans la tige de mise sous pression (11) ; et
une partie de maintien en caoutchouc (13) formée à l'avant du caoutchouc d'expansion de tuyau (12) dans la tige de mise sous pression (11),
**caractérisé en ce que**
une pluralité de saillies (8a) ou de creux (8b) est placée de manière à être distribuée dans une surface conique entière de la seconde partie conique de type assiette (7).

2. Appareil d'expansion de tuyau (1) pour un tuyau en acier inoxydable mince (2) selon la revendication 1, **caractérisé en ce qu'**une vis mâle (19) est formée dans une surface périphérique externe d'une partie avant de la tête d'expansion de tuyau (5), qu'une vis femelle (23) est formée dans une surface périphérique interne d'une partie arrière de la bague d'expansion de tuyau (8), et que la vis mâle (19) et la vis femelle (23) sont vissées ensemble pour fixer de manière amovible la bague d'expansion de tuyau (8) à la tête d'expansion de tuyau (5).

3. Appareil d'expansion de tuyau (1) pour un tuyau en acier inoxydable mince (2) selon la revendication 1, **caractérisé en ce qu'**une saillie de montage (14) est formée dans une surface périphérique externe d'une partie avant de la tête d'expansion de tuyau (5), qu'un creux de montage (15) est formé dans une surface périphérique interne d'une partie arrière de la bague d'expansion de tuyau (8), et que la saillie de montage (14) est montée dans le creux de montage (15) pour fixer de manière amovible la bague d'expansion de tuyau (8) à la tête d'expansion de tuyau (5).

4. Appareil d'expansion de tuyau (1) pour un tuyau en acier inoxydable mince (2) selon l'une quelconque des revendications 1 à 3, **caractérisé en ce que** chacun de la pluralité de saillies (8a) ou de creux (8b) est placé sur une pluralité de cercles concentriques ayant différents diamètres dans la surface conique de la seconde partie conique de type assiette (7).

5. Appareil d'expansion de tuyau (1) pour un tuyau en acier inoxydable mince (2) selon l'une quelconque revendications 1 à 4, **caractérisé en ce que** la pluralité de saillies (8a) ou de creux (8b) est distribuée dans la surface conique dans laquelle des angles centraux de la seconde partie conique de type assiette (7) sont sensiblement également séparés les uns des autres.

6. Appareil d'expansion de tuyau (1) pour un tuyau en acier inoxydable mince (2) selon l'une quelconque revendications 1 à 5, **caractérisé en ce que** la saillie (8a) est une saillie granulaire.

7. Appareil d'expansion de tuyau (1) pour un tuyau en acier inoxydable mince (2) selon l'une quelconque revendications 1 à 6, **caractérisé en ce qu'**une saillie (4a) ou un renfoncement (4b) est formé dans une surface de la première partie conique de type assiette (4).

8. Appareil d'expansion de tuyau (1) pour un tuyau en acier inoxydable mince (2) selon la revendication 7, **caractérisé en ce que** la saillie (4a) ou le renfoncement (4b) a une forme de tige ou une forme de rainure allongée radialement faisant saillie depuis un centre de la première partie conique de type assiette (4) vers une direction périphérique extérieure.
